# EUROPÄISCHE PATENTANMELDUNG

(11) **EP 4 458 119 A1**
(43) Veröffentlichungstag der Anmeldung: **06.11.2024**
(21) Anmeldenummer: 24169773.9
(22) Anmeldetag: 11.04.2024
(51) Int. Cl.: A01B 13/02, A01B 35/28, A01B 35/16, A01B 49/04, A01C 9/00

(54) **DAMMROLLENTEIL UND DAMMROLLE**

(30) Priorität: 14.04.2023 DE 202023101922 U
(71) Anmelder: Grimme Landmaschinenfabrik GmbH & Co. KG, 49401 Damme (DE)
(72) Erfinder: RECHTIEN, Jochen, 49088 Osnabrück (DE); DREISHING, Michael, 49434 Neuenkirchen-Vörden (DE)
(74) Vertreter: Wischmeyer, André

(57) **Zusammenfassung**

Die vorliegenden Erfindung betriff ein Dammrollenteil zur Formung einer Dammflanke umfassend eine Mehrzahl von in Umfangsrichtung um eine Längsmittelachse (16) herum angeordneten und über eine innere Stützstrukur gehaltenen Flankenformelementen (22), die sich in Richtung der Längsmittelachse (16) zunehmend von der Längsmittelachse (16) radial nach außen erstrecken, welches, zumindest eines und vorzugsweise alle Flankenformelemente (22) wenigstens teilweise aus elastischem Kunststoff sind. Des Weiteren betrifft die Erfindung eine Dammrolle und eine Legemaschine.

## Beschreibung

Die vorliegende Erfindung betrifft ein Dammrollenteil zur Formung einer Dammflanke, umfassend eine Mehrzahl von in Umfangsrichtung um eine Längsmittelachse herum angeordneten und über eine innere Stützstruktur gehaltenen Flankenformelementen, die sich -einer gewünschten Dammflankenform entsprechend- in Richtung der Längsmittelachse zunehmend von der Längsmittelachse radial nach außen erstrecken. Des Weiteren betrifft die Erfindung eine Dammrolle.

Dammrollen kommen insbesondere bei Legemaschinen zum Einsatz, die Vermehrungsfrüchte für Hackfrüchte, beispielsweise Kartoffelknollen, in einen Damm eines Ackerbodens einbringen. Ein Dammrollenteil ist der Teil einer beispielsweise als Gitterrolle ausgebildeten Dammrolle, der für die Bearbeitung und Formung der Dammflanke bzw. deren Oberfläche vorgesehen ist. Dammrollen und Dammrollenteil werden beispielsweise nach der grundlegenden Formung des Damms durch Dammbleche eingesetzt, um die Oberfläche des Damms weiter auszubilden, beispielsweise aufzurauhen oder zu profilieren.

Bei bindigen Böden führt das Anbacken von Erde an der als Gitterrolle ausgebildeten Dammrolle, insbesondere zwischen den Flankenformelementen, bei der Dammformung zu ungleichmäßigen Dämmen, die zu unterschiedlichen Wachstumsbedingungen für die Pflanzen führen. Dies wird nicht gewünscht. Bislang musste die Dammrolle daher bei insbesondere bindigen Böden regelmäßig gereinigt werden. Alternativ wurden Abstreifer vorgeschlagen, die allerdings einen erhöhten Rollwiderstand und eine Gefahr der Einklemmung von Steinen mit sich bringen. Im Gitter der Dammrolle verklemmte Steine können zu Schäden an der tragenden Struktur und ebenfalls zu Schäden am Damm führen

Es ist Aufgabe der vorliegenden Erfindung, eine Dammrolle hinsichtlich der vorgenannten Nachteile zu verbessern.

Die Erfindung löst das Problem durch die Merkmale des Anspruchs 1 sowie durch Gegenstände gemäß den Ansprüchen 17 und 20. Vorteilhafte Ausgestaltungen der Erfindung sind den Unteransprüchen sowie der nachfolgenden Beschreibung zu entnehmen.

Erfindungsgemäß ist vorgesehen, dass zumindest eines und vorzugsweise alle Flankenformelemente wenigstens teilweise aus elastischem Kunststoff sind bzw. hergestellt sind. Die Flankenformelemente sind somit zumindest teilweise und insbesondere vollständig elastisch ausgebildet. Nach einer durch eine ausreichend große Krafteinwirkung bedingten Formänderung kehren sie wieder in ihre Ausgangsform zurück. Die Ausgangsform entspricht beispielsweise derjenigen einer klassischen Gitterrolle in unbelastetem Zustand.

Aufgrund der der Verwendung zumindest teilweise und insbesondere vollständig elastisch ausgebildeter Flankenformelemente des Dammrollenteils haftet im Betrieb Erde nicht oder zumindest stark vermindert an. Steine im Damm können elastisch überrollt werden, ohne dass ein Schaden an dem Dammrollenteil bzw. der Dammrolle entsteht. Darüber hinaus wird das Eigengewicht ebenfalls reduziert, so dass zusätzlich einer zu hohen Verdichtung des Damms durch ein Eigengewicht der Dammrolle entgegengewirkt wird. Insbesondere können die aus einem elastischen Kunststoff hergestellten Elemente des Dammrollenteils in einem Gießverfahren kostengünstig hergestellt werden, was eine Verringerung der Prozesskosten beim Anwender nach sich zieht. Darüber hinaus wird aufgrund der teilweise elastischen Dammrollenteile einer Verletzungsgefahr entgegengewirkt.

Als Kunststoffe werden hierbei sämtliche, aus natürlichen oder nicht-natürlichen Rohstoffen hergestellte Verbundmaterialien oder Materialien angesehen, zu denen auch Glasfaser oder Kunststoff-Metall-Verbindungen zählen können. Insbesondere sind die Dammrollenteile zumindest hinsichtlich der Flankenformelemente metallfrei ausgebildet.

Die Flankenformelemente sind vorzugweise zu mehr als 50 % und insbesondere vollständig aus elastischem Kunststoff ausgebildet, was einen einfachen Herstellungsprozess und auch eine gute Einstellbarkeit der elastischen Eigenschaften des Dammrollenteils nach sich zieht.

Insbesondere weist das Material der Flankenformteile eine Shorehärte A von 85 bis 100 sowie insbesondere von 90 bis 98 auf und ist als solches ausreichend steif ausgebildet, um eine Bearbeitung der Dammflanken zu ermöglichen, und gleichzeitig jedoch ausreichend flexibel, um auf etwaige Hindernisse ausweichend reagieren zu können.

Das Material der Flankenformelemente weist alternativ oder ergänzend eine Shorehärte D zwischen 50 und 90 und insbesondere zwischen 55 und 85 auf, so dass je nach Art des Untergrunds ein passendes Dammrollenteil ausgesucht werden kann.

Vorteilhafterweise sind die Flankenformelemente aus einem Polyurethan, insbesondere aus einem thermoplastischen Polyurethan hergestellt, dessen Eigenschaften im Gießverfahren gut kontrollierbar sind und welches keine nachteiligen Auswirkungen auf die Umwelt erwarten lässt.

Ein zugehöriges Elastizitätsmodul des verwendeten Materials bzw. der Flankenformelemente, gemessen im Biegeversuch nach DIN EN ISO 178 und im Zugversuch nach DIN EN ISO 527, liegt zwischen 60 MPa und 2000 MPa. Hierbei werden insbesondere stabförmige, längliche Flankenformelemente untersucht.

Alternativ oder ergänzend zu einer Ausbildung der Flankenformelemente aus einem PU können diese auch aus einem POM (Polyoxymethylen), einem PP (Polypropylen) oder einem PK (Polyketon) hergestellt sein. Hierbei werden dann gemäß den vorgenannten Normen vorzugsweise Elastizitätsmodule zwischen 1200 und 2500 MPa realisiert, um die Flankenformelemente optimal auf den jeweiligen Untergrund anzupassen.

Die Ausbildung eines entsprechend Dammrollenteils ist besonders vorteilhaft, wenn die Flankenformelemente und zumindest ein Teil der Stützstruktur einstückig aus insbesondere elastischem Kunststoff aufgebaut sind. Dies vereinfacht die Herstellung und ermöglicht eine besonders kostengünstige und leichte Herstellung. Darüber hinaus ist bei einer hiermit einhergehenden Flexibilität der Stützstruktur das Dammrollenteil besonders elastisch ausgebildet.

Die Stützstruktur kann hierbei gemäß einer Weiterbildung der Erfindung wenigstens einen in Umfangsrichtung umlaufenden Stützring aufweisen, der zumindest einen Teil der Flankenformelemente miteinander verbindet. Auch dieser ist vorzugsweise aus elastischem Kunststoff. Insbesondere sind alle vorteilhafterweise länglich ausgebildeten Flankenformelemente über zumindest einen, vorzugsweise über zumindest zwei solcher Stützringe miteinander verbunden, so dass sich eine gitterartige Außenstruktur zur Formung der Dammflanke ergibt.

Der oder die Stützringe können von einem Ende der insbesondere stab- oder stegförmigen Flankenformelemente beabstandet sein, so dass durch ein freistehendes Ende weiterhin eine hohe Flexibilität der Flankenformelemente erreicht wird.

Insbesondere auf ihrem zur Längsmittelachse hin ausgerichteten Ende der Flankenformelemente kann ein solches mit einem Teil der Stützstruktur jeweils ein Dreieck ausbilden, wobei eine Seite des Dreiecks zumindest in etwa und vorzugsweise vollständig parallel zur Längsmittelachse verläuft. Eine solche Innenseite definiert einen Bereich, der insbesondere bei einer Längsverschiebung des Dammrollenteils auf einer Basisrolle an dieser entlang bewegt werden kann. Das Dreieck als Stützdreieck erstreckt sich hierbei mit seiner flächigen Ausrichtung insbesondere in radialer Richtung, so dass in Umfangsrichtung eine Flexibilität und ein Ausweichen der Flankenformelemente möglich ist, gleichzeitig in radialer Richtung allerdings eine gewisse Festigkeit vorhanden bleibt.

Die Flankenformelemente sind insbesondere als Streben und/oder Stege und somit länglich ausgebildet. Sie weisen in der Zusammenschau auf ihrer von der Längsmittelachse, die im Betrieb einer Drehachse der Dammrolle entspricht, abgewandten Außenseite eine Umhüllende aus, die sich in Richtung der Längsmittelachse aufweitet und an ihrem von der Längsmittelachse entferntesten Ende beispielsweise im Betrieb bis zur Dammsohle reicht.

Vorteilhafterweise umfasst die Stützstruktur eine Verstellvorrichtung, über die wenigstens ein Adapterelement zur Anbindung des Dammrollenteils an eine Zentralachse einer Dammrolle verstellbar festgelegt ist. Dieses Adapterelement kann ebenfalls aus einem Kunststoff aufgebaut sein. Es kann sich auch um ein Metallteil handeln, welches sich für eine Anbindung an die typischerweise metallische Zentralachse einer Dammrolle gut eignet. Ein solches Adapterelement kann beispielsweise scheibenförmig sein und bezüglich der Längsmittelachse an unterschiedlichen Bereichen der Stützstruktur festgelegt sein.

Vorzugsweise kann die Verstellvorrichtung wenigstens ein und insbesondere zumindest drei Verstellprofilelemente aufweisen, die sich in Längsrichtung der Längsmittelachse oder in Umfangsrichtung um die Längsmittelachse herum erstrecken und die Anlageschultern aufweisen, über die eine Rasterung der Einstellung vorgegeben wird. Insbesondere erstrecken sich die Verstellprofilelemente in Richtung der Längsmittelachse, wobei diese innenseitig etwaiger der vorbezeichneten Dreiecke angeordnet sein können. Vorzugsweise weist das Dammrollenteil vier sich in Richtung der Längsmittelachse erstreckende Verstellprofilelemente auf, die einstückig mit dem einem Stützring und einem etwaig vorhandenen Grundkörper der Stützstruktur ausgebildet sind.

Die Anlageschultern der Verstellprofilelemente können in Richtung der Längsmittelachse oder in Umfangsrichtung versetzt ausgebildet sein, um die für die Verstellvorrichtung möglichen Rastpositionen für unterschiedliche Breiten zu ermöglichen. Hierfür können das oder die Adapterelemente an den insbesondere in Richtung der Längsmittelachse versetzten Anlageschultern festlegbar sein.

Insbesondere weist das Dammrollenteil zwei Adapterelemente auf, die jeweils zumindest einen Anlagebereich zur Herstellung einer Klemmverbindung mit den Verstellprofilelementen aufweisen. Hierdurch können auf unterschiedlichen Seiten der Verstellprofilelemente angeordnete Anlageschultern oder voneinander weg gerichtete Anlageschultern eines Verstellprofilelementes gegeneinander verklemmt werden. Hierfür können die beiden Adapterelemente aneinander gezogen festgelegt werden, beispielsweiser über Schrauben oder andere Feststellmittel. Eine solche Verstellvorrichtung kann auch unabhängig von einer zumindest teilweisen Ausbildung des Dammrollenteils aus elastischem Kunststoff bei im Stand der Technik bekannten Dammrollen aus Metall Verwendung finden.

Die Adapterelemente können innenseitig beispielsweise über eine Schraubverbindung auf (beispielsweise einer Zentral-) Achse einer zugehörigen Dammrolle bzw. einer zugehörigen Basisrolle einer Dammrolle befestigt werden. Es kann ausreichen, wenn eines der Adapterelemente auf der Achse festlegbar ist, während das weitere Adapterelement an dem ersten Adapterelement befestigt ist. Insbesondere sind die Adapterelemente scheibenförmig ausgebildet und weisen Ausnehmungen zur Aufnahme der Verstellprofilelemente auf. Die Ränder und angrenzende Flächen der Ausnehmungen bilden insbesondere die Anlagebereiche für die Anlageschultern aus. Beispielsweise können durch Verdrehen in Umfangsrichtung um die Längsmittelachse unterschiedlich weit von der Drehachse entfernte Ausnehmungen an entsprechende Anlageschultern verbracht werden, wobei die Adapterelemente in Längsrichtung zur Anpassung an die Verstellprofilelemente verschoben werden.

Die eingangs gestellte Aufgabe wird ebenfalls gelöst durch eine Dammrolle, umfassend eine Basisrolle mit einer Mehrzahl von in Umfangsrichtung um eine Längsmittelachse herum angeordneten Umfangselementen zur Formung einer Dammkrone sowie umfassend wenigstens ein und insbesondere zwei Dammrollenteile wie vor- oder nachbeschrieben. Durch die flexible Ausbildung der für die Dammflanken vorgesehenen Dammrollenteile kommen auch der Dammrolle die vorbeschriebenen Vorteile der Erfindung zugute.

Durch die etwaige Verstellvorrichtung kann die Dammrolle mit unterschiedlichen Dammkronenbreiten versehen werden, wobei die sich zur Längsmittelachse des Dammrollenteils hin erstreckenden Enden der Flankenformelemente dicht an den Umfangselementen der Basisrolle, die ebenfalls stab- oder stegförmig ausgebildet sein können, angeordnet sind. Durch die Verstellvorrichtung und in Längsmittelachsenrichtung ausgebildete Verstellprofilelemente kann die Breite der Dammkrone variiert werden. Anstelle aus Stahl können die Umfangselemente der insbesondere in etwa zylindrisch ausgebildeten Basisrolle aus einem elastischen Kunststoff ausgebildet sein, um die vorteilhaften Eigenschaften der Dammrollenteile zu übernehmen. Gleiches gilt für zumindest Teile der die Umfangselemente tragenden Stützstruktur der Basisrolle.

Gemäß einer Weiterbildung der Erfindung ist das Dammrollenteil oder sind die Dammrollenteile zumindest teilweise relativ zur Basisrolle drehbar, und zwar um die Längsmittelachse, an der Basisrolle angeordnet. Hierfür kann das der Basisrolle zuzuordnende Befestigungsmittel, beispielsweise eine bei anderen Varianten der Erfindung fest mit einem Zentralkörper, beispielsweise einer Zentralachse, verbundene Adapterplatte auf dem Zentralkörper gelagert sein. Alternativ kann ein solches Drehlager auch auf Seiten des Dammrollenteils vorgesehen sein, so dass die Festlegungsmittel, über die das Dammrollenteil mit der Basisrolle verbindbar ist, gegenüber dem weiteren Dammrollenteil drehbar ist.

Vorzugsweise weist die mit relativ zueinander drehbaren Teilen versehene Dammrolle eine oder mehrere Arretiervorrichtungen auf, über die die Drehbewegung verhindert oder freigegebbar ist. Insbesondere kann die jeweilige Arretiervorrichtung ein Arretiermittel aufweisen, insbesondere in Form eines Arretierstifts, das aus einer Blockadeposition, in der das Arretiermittel die Bewegung des einen Teil gegenüber dem andere Teil über einen Anschlag in Umfangsrichtung blockiert, in eine Freigabeposition, in der die Relativdrehbewegung möglich ist, überführbar ist. Die Bewegung des Arretiermittels erfolgt insbesondere zumindest anteilig in Richtung der Längsmittelachse, insbesondere auch um auch bei unterschiedlich breiten Dammrollen eine Arretierung bewirken zu können.

Ebenfalls wird die eingangs gestellte Aufgabe durch eine Legemaschine für Hackfrüchte gelöst, die wenigstens eine mittels einer Haltevorrichtung drehbar an einem Arm der Legemaschine gehaltene, erfindungsgemäße Dammrolle aufweist. Auch dieser Legemaschine kommen die dem Dammrollenteil zugeschriebenen Vorteile der Erfindung zu.

Weitere Vorteile und Einzelheiten der Erfindung sind der nachfolgenden Figurenbeschreibung zu entnehmen. Schematisch dargestellt zeigt:

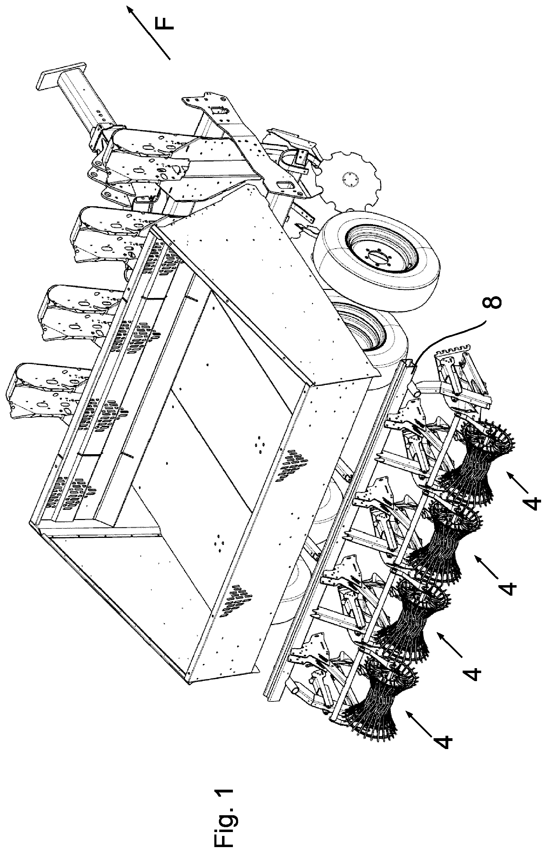

- Fig. 1: eine erfindungsgemäße Legemaschine,
- Fig. 2: eine erfindungsgemäße Dammrolle,
- Fig. 3: ein erfindungsgemäßes Dammrollenteil,
- Fig. 4: den Gegenstand nach Fig. 3 in einer weiteren perspektivischen Ansicht,
- Fig. 5: den Gegenstand nach Fig. 4 in einer Ansicht in Richtung der Längsmittelachse,
- Fig. 6: den Gegenstand nach Fig. 3 in einer entlang der Längsmittelachse geschnittenen Darstellung,
- Fig. 7: den Gegenstand nach Fig. 2 in einer ersten Position,
- Fig. 8: den Gegenstand nach Fig. 7 in einer weiteren Position,
- Fig. 9 bis Fig. 11: Teile einer Verstellvorrichtung,
- Fig. 12: eine weitere erfindungsgemäße Vorrichtung in einem Längsschnitt.

Einzelne technische Merkmale der nach beschriebenen Ausführungsbeispiele können auch in Kombination mit vorbeschriebenen Ausführungsbeispielen sowie den Merkmalen eines der unabhängigen Ansprüche und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

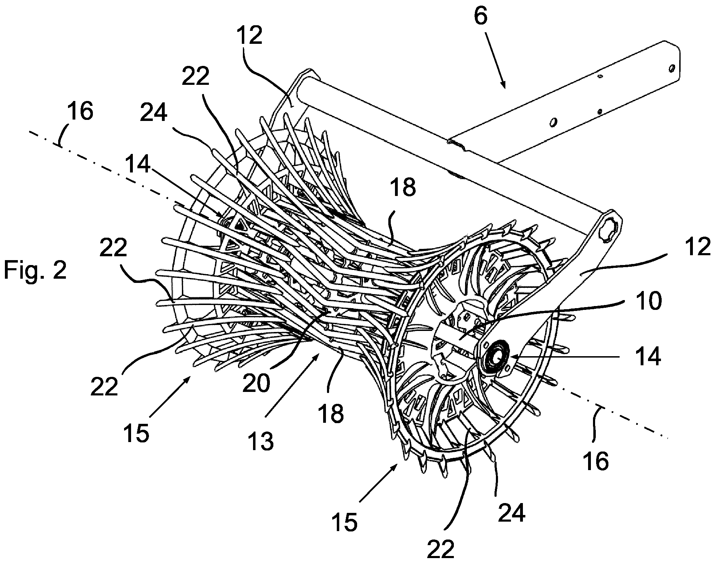

Eine erfindungsgemäße Legemaschine 2 ist an ihrem bezüglich einer Fahrtrichtung F hinteren Ende mit insgesamt vier Dammrollen 4 versehen, die mittels einer Haltevorrichtung 6 (Fig. 2) an einem Rahmen 8 der Legemaschine 2 angeordnet sind. In der Haltevorrichtung 6 ist eine Zentralachse 10 an seitlichen Haltearmen 12 in Lagern 14 drehbar gelagert. Durch die vier Gitterrollen 4 wird auf einer Dammoberfläche eine Krümelstruktur und somit eine Profilierung geformt, die eine bessere Wasseraufnahme auf leichten Böden ermöglicht. Aufgrund der flexiblen bzw. elastischen Ausbildung der Dammrollenteile wird das Anbacken von bindigen Böden auf den die Flanken ausbildenden Teilen einer Dammrolle verhindert.

Eine Dammrolle 4 umfasst zunächst eine in etwa zylindrisch geformte, zentrale Basisrolle 13 mit zwei hieran angeordneten Dammrollenteilen 13. Die Basisrolle 13 weist um eine für Basisrolle 13 und Dammrollenteile 15 gemeinsame Längsmittelachse 16 herum angeordnete Umfangselemente 18 auf, die stabförmig ausgebildet sind und sich leicht angewinkelt im Wesentlichen in Richtung der Längsmittelachse 16 erstrecken. Gehalten werden die Umfangselemente über mit der Zentralachse 10 verbundene Stützelemente 20. Die Umfangselemente 18 sind in Umfangsrichtung beabstandet voneinander, wobei die Enden 24 von Flankenformelementen 22 der endseitigen Dammrollenteile 15 dazwischen greifen können.

Die Längsmittelachse 16 der Dammrolle 4 entspricht auch der Längsmittelachse 16 der Dammrollenteile 15, deren Flankenformelemente 22 sich entsprechend der gewünschten Dammflankenform entlang der Richtung der Längsmittelachse 16 zunehmend von dieser radial nach außen erstrecken, so dass Enden 24 bis zur Dammsohle reichen können (Fig. 2).

Die Enden 24 sind genauso wie die weiteren Flankenformelemente aus elastischem Kunststoff, vorliegend einem thermoplastischen Polyurethan hergestellt, der eine Shorehärte D von 55 bis 60 aufweist und somit ausreichend flexibel ist, etwaigen Steinen zumindest teilweise ausweichen zu können und anschließend wieder die ursprüngliche Form zur Formung des Damms einzunehmen.

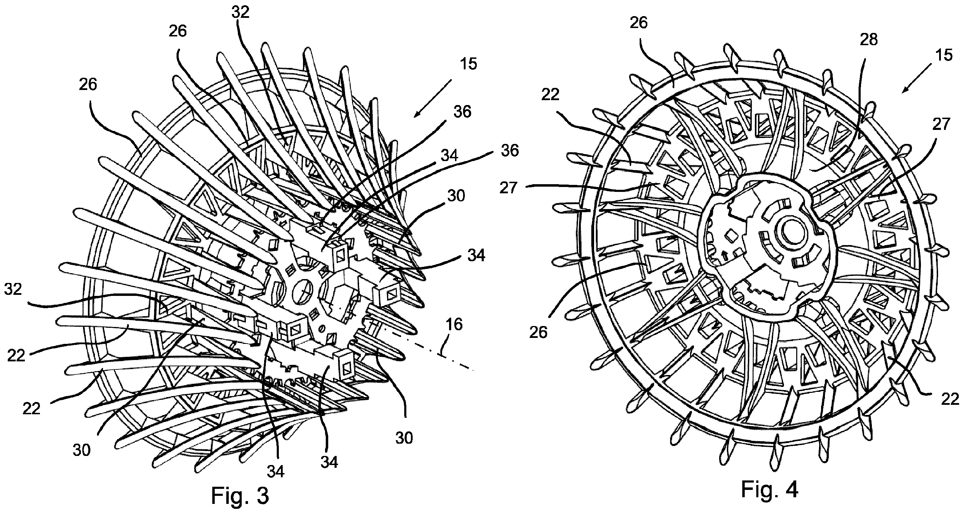

Eine innere Stützstruktur umfasst jeweils zwei in Umfangsrichtung um die Längsmittelachse 16 herum laufende Stützringe 26 sowie einen ebenfalls über Verstrebungen 27 mit einem der Stützringe 26 verbundenen Grundkörper 28 (Fig. 3 und 4). Sowohl der Grundkörper 28 als auch die Stützringe 26 sind einstückig mit den Flankenformelementen 22 aus elastischem Kunststoff in einem Gießverfahren. Aufgrund der Auslegung des Materials handelt es sich um eine elastische und nachgiebige Struktur, die ausreichend fest für eine Dammformung und gleichzeitig auch ausreichend nachgiebig zur Vermeidung von Beschädigungen durch Steine oder andere Materialien ist. Gleichzeitig wird aufgrund der Elastizität das Anhaften von bindigen Böden erschwert.

Innenseitig weist die Stützstruktur zumindest in etwa parallel zur Längsmittelachse 16 verlaufende Längsstreben 30 auf, die gemeinsam mit den Flankenformelementen und weiteren Streben 32 stabilisierende Dreiecke in Form von Stützdreiecken ausbilden, die sich in radialer Richtung erstrecken.

Die Flankenformelemente sind mit ihrer radial von der Längsmittelachse 16 nach au-ßen gerichteten Oberfläche konkav ausgebildet und geben der Flanke des Damms somit eine konvexe Form.

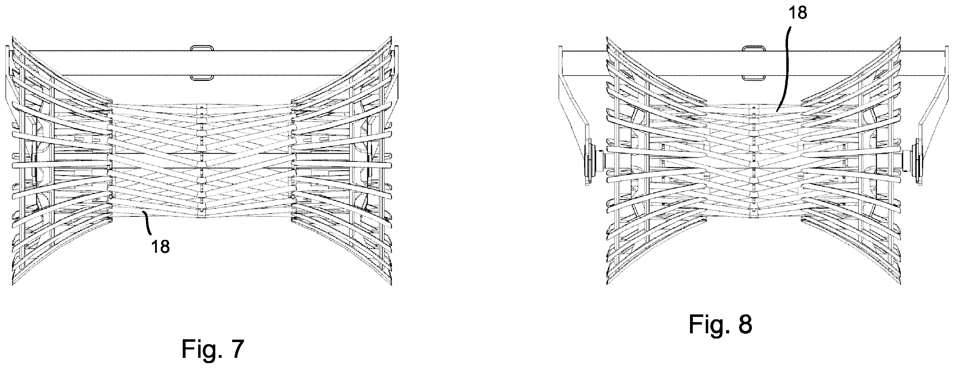

Innenseitig der Längsstreben 30 (Fig. 3) sind vier Verstellprofilelemente 34 angeordnet, die Teil einer Verstellvorrichtung sind, über die ein Dammrollenteil 15 in Richtung der Längsmittelachse 16 in unterschiedlichen Positionen bzgl. einer Basisrolle 13 festgelegt werden kann (Fig. 7 und 8).

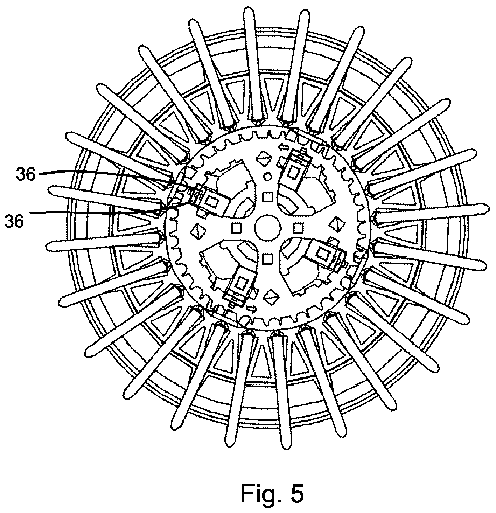

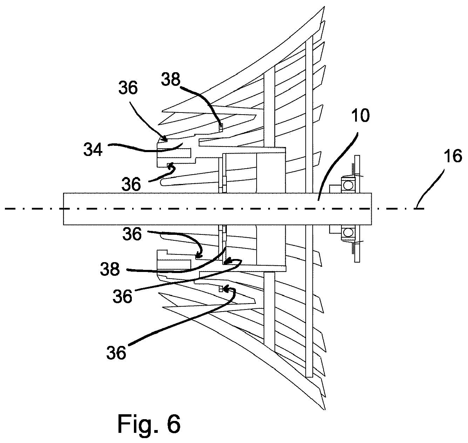

Hierfür sind die Verstellprofilelemente 34 mit Anlageschultern 36 versehen (Fig. 5 und 6), an die sich Anlagebereiche von Adapterelementen, die eine Verbindung zur Zentralachse 10 herstellen, anlegen. Zur Festlegung in einer bestimmten Position werden zwei Adapterelemente 38 mit zwei Anlagebereichen, wie in Fig. 6 dargestellt, in entgegengesetzte Richtungen bezügliche der Längsmittelachse 16 gegeneinander gezogen, beispielsweise gegeneinander verschraubt, und klemmen hierbei über die Kraftbeaufschlagung der Anlageschultern das jeweilige Verstellprofilelement 34 ein. Aufgrund der Verbindung zumindest eines der Adapterelemente 38 mit der Zentralachse 10, die beispielsweise über eine Verschraubung eines der Adapterelemente herbeigeführt werden kann, ist dann der weitere Teil des Dammrollenteils festgelegt.

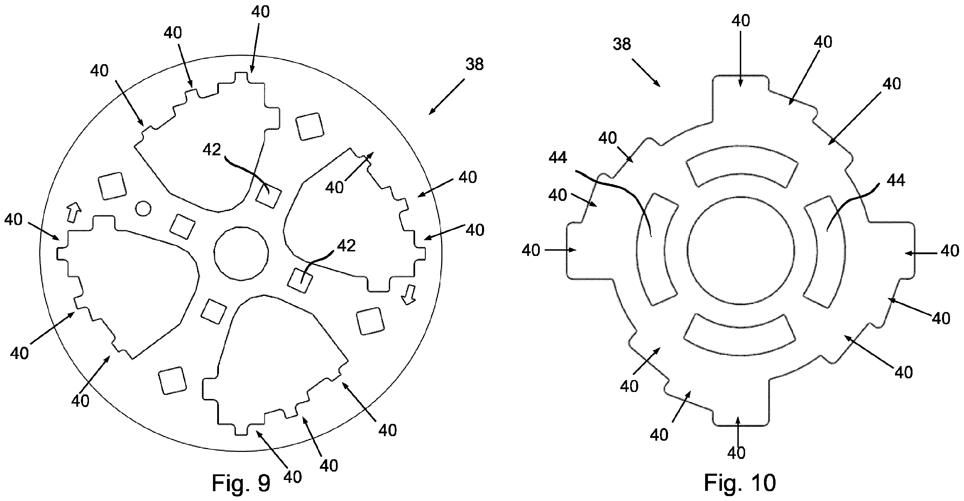

Die Adapterelemente 38 sind nach Art einer mit Ausnehmungen versehenen Scheiben oder eines Kranzes mit in Umfangsrichtung verschiedenen Anlagebereichen 40 versehen, so dass die in Längsrichtung der Längsmittelachse 16 betrachtet versetzt zueinander liegenden Anlageschultern der Verstellprofilelemente je nach Verdrehen der Adapterelemente 38 zur Ausbildung einer Rasterung in Längsrichtung der Längsmittelachse miteinander in Eingriff gesetzt werden können. Die Anlagebereiche 40 des Adapterelements 38 nach Fig. 9 erfasst die radial nach außen liegenden Anlageschultern 36 eines Verstellprofilelements während die Anlagebereiche 40 des Adapterelements nach Fig. 10 die zur Längsmittelachse angeordneten Anlageschultern eines Verstellprofilelements erfasst.

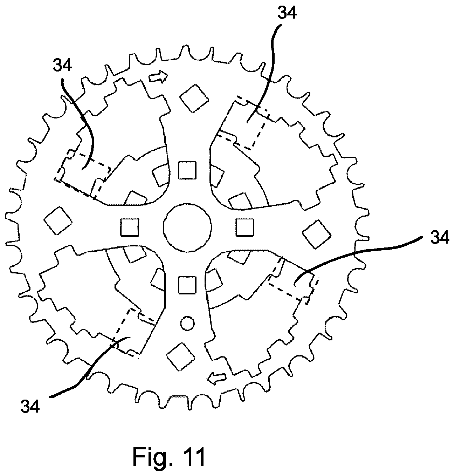

Während das Adapterelement 38 gemäß Fig. 9 für die Anbindung an die Zentralachse 10 Sorge trägt, dient das Adapterelement 38 gemäß Fig. 10 hauptsächlich zur Verklemmung des Verstellprofilelements 34 und somit als Sicherungsscheibe, über die die Verstellprofilelemente an dem Adapterelement 38 nach Fig. 9 gehalten werden. Beide Adapterelemente 38 weisen jeweils vier mal drei Anlagebereiche 40 auf, um gegen die vier Verstellprofilelemente verklemmt zu werden. Über Ausnehmungen 42 und Langlöcher 44 können die Adapterelemente miteinander verschraubt und in Umfangsrichtung zwecks Einnahme einer entsprechenden Position an einem Verstellprofilelement 34 verdreht werden. Beispielhaft ist eine Position der Verstellprofilelemente in Fig. 11 gestrichelt dargestellt.

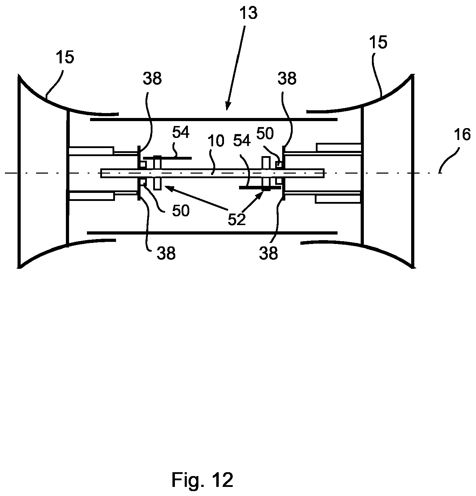

In Figur 12 ist eine weitere erfindungsgemäße Vorrichtung abgebildet, in der zwei Dammrollenteile 15 relativ zur Basisrolle 13 drehbeweglich um eine Längsmittelachse 16 an der Basisrolle 13 festgelegt ist. Hierfür sind die Adapterelemente 38 über Lager 50 an der Zentralachse 10 drehbeweglich angeordnet. Mittels zweier Arretiervorrichtungen 52, die jeweils ein Arretiermittel 54 in Form eines Arretierstiftes aufweisen, können die Dammrollenteile 15 zur Verhinderung der Relativdrehbewegung gegenüber der Zentralachse 10 arretiert werden. Hierfür wird das in einer Führung der Arretiervorrichtung 52 in Richtung der Längsmittelachse 16 bewegbare Arretiermittel 54 in eine Ausnehmung des Adapterelements 38 eingeführt, welche durch einen seitlichen Anschlag begrenzt ist. Ähnlich wie die vorherigen Ausführungsvarianten kann über nicht dargestellte Adapterelemente 38 eine Positionierung der Dammrollenteile 15 in Richtung der Längsmittelachse 16 vorgenommen werden.

## Patentansprüche

1. Dammrollenteil zur Formung einer Dammflanke umfassend eine Mehrzahl von in Umfangsrichtung um eine Längsmittelachse (16) herum angeordneten und über eine innere Stützstrukur gehaltenen Flankenformelementen (22), die sich in Richtung der Längsmittelachse (16) zunehmend von der Längsmittelachse (16) radial nach außen erstrecken, **dadurch gekennzeichnet, dass** zumindest eines und vorzugsweise alle Flankenformelemente (22) wenigstens teilweise aus elastischem Kunststoff sind.

2. Dammrollenteil nach Anspruch 1, **dadurch gekennzeichnet, dass** die Flankenformelemente (22) zu mehr als 50% und insbesondere vollständig aus elastischem Kunststoff sind.

3. Dammrollenteil nach einem der vorherigen Ansprüche, **dadurch gekennzeichnet, dass** das Material der Flankenformelemente (22) eine Shorehärte A von 85 bis 100 sowie insbesondere von 90 bis 98 aufweist.

4. Dammrollenteil nach einem der vorherigen Ansprüche, **dadurch gekennzeichnet, dass** das Material der Flankenformelemente (22) eine Shorehärte D zwischen 50 und 90 und insbesondere zwischen 55 und 85 aufweist.

5. Dammrollenteil nach einem der vorherigen Ansprüche, **dadurch gekennzeichnet, dass** die Flankenformelemente (22) aus einem Polyurethan, insbesondere aus einem thermoplastischen Polyurethan hergestellt sind.

6. Dammrollenteil nach Anspruch 5, **gekennzeichnet durch** ein Elastizitätsmodul (im Biegeversuch nach DIN EN ISO 178 und im Zugversuch nach DIN EN ISO 527) zwischen 60 MPa und 2000 MPa.

7. Dammrollenteil nach einem der vorherigen Ansprüche 1 bis 4, **dadurch gekennzeichnet, dass** die Flankenformelemente (22) aus einem POM, PP oder PK hergestellt sind.

8. Dammrollenteil nach Anspruch 7, **gekennzeichnet durch** ein Elastizitätsmodul (im Biegeversuch nach DIN EN ISO 178 und im Zugversuch nach DIN EN ISO 527) zwischen 1200 MPa und 2500 MPa.

9. Dammrollenteil nach einem der vorherigen Ansprüche, **dadurch gekennzeichnet, dass** die Flankenformelemente (22) und zumindest ein Teil der Stützstruktur einstückig aus Kunststoff aufgebaut sind.

10. Dammrollenteil nach Anspruch 9, **dadurch gekennzeichnet, dass** die Flankenformelemente (22) und der einstückig hiermit ausgebildete Teil der Stützstruktur durch ein Gießverfahren hergestellt sind.

11. Dammrollenteil nach Anspruch 9 oder 10, **gekennzeichnet durch** wenigstens einen in Umfangsrichtung umlaufenden Stützring (26) der Stützstruktur, der zumindest einen Teil der Flankenformelemente (22) miteinander verbindet.

12. Dammrollenteil nach einem der vorherigen Ansprüche, **dadurch gekennzeichnet, dass** die Flankenformelemente (22) mit einem Teil der Stützstruktur jeweils Dreiecke ausbilden, wobei eine Seite der Dreiecke zumindest in etwa und vorzugsweise vollständig parallel zur Längsmittelachse (16) verlaufen.

13. Dammrollenteil nach einem der vorherigen Ansprüche, **dadurch gekennzeichnet, dass** die Flankenformelemente (22) als Streben und/oder Stege länglich ausgebildet sind.

14. Dammrollenteil nach einem der vorherigen Ansprüche, **dadurch gekennzeichnet, dass** die Stützstruktur eine Verstellvorrichtung aufweist, über die wenigstens ein Adapterelement (38) zur Anbindung des Dammrollenteils (15) an eine Zentralachse (10) verstellbar festgelegt ist.

15. Dammrollenteil nach Anspruch 14, **dadurch gekennzeichnet, dass** die Verstellvorrichtung wenigstens ein und insbesondere zumindest drei Verstellprofilelemente (34) aufweist, die sich in Längsrichtung der Längsmittelachse (16) oder in Umfangsrichtung um die Längsmittelachse (16) erstrecken und die Anlageschultern (36) aufweisen.

16. Dammrollenteil nach Anspruch 15 mit zwei Adapterelementen, **dadurch gekennzeichnet, dass** die Adapterelemente (38) wenigstens einen Anlagebereich (40) zur Herstellung einer Klemmverbindung mit den Verstellprofilelementen (34) aufweisen.

17. Dammrolle umfassend eine Basisrolle mit einer Mehrzahl von in Umfangsrichtung um die Längsmittelachse (16) herum angeordneten Umfangselementen (18) zur Formung einer Dammkrone sowie umfassend wenigstens einen und insbesondere zwei Dammrollenteile (15) nach einem der vorherigen Ansprüche.

18. Dammrolle nach Anspruch 17, **dadurch gekennzeichnet, dass** das wenigstens eine Dammrollenteil (15) zumindest teilweise relativ zur Basisrolle (13) und um die Längsmittelachse (16) drehbar an der Basisrolle (13) angeordnet ist.

19. Dammrolle nach Anspruch 18, **dadurch gekennzeichnet, dass** das Dammrollenteil (15) mittels wenigstens einer insbesondere ein vorzugsweise in Richtung der Längsmittelsachse (16) verschiebbares Arretiermittel (54) aufweisenden Arretiervorrichtung (52) an der Basisrolle (13) eine Relativdrehbewegung verhindernd festlegbar ist.

20. Legemaschine für Hackfrüchte umfassend wenigstens eine mittels einer Haltevorrichtung drehbar an einem Rahmen (8) der Legemaschine gehaltene Dammrolle (4) nach Anspruch 17.
